# EUROPEAN PATENT APPLICATION

(11) **EP 4 576 508 A1**
(43) Date of publication of application: **25.06.2025**
(21) Application number: 22955749.1
(22) Date of filing: 19.08.2022
(51) Int. Cl.: H02K 3/30

(54) **ROTATATING ELECTRIC MACHINE**

(71) Applicant: Mitsubishi Generator Co., Ltd., Kobe City, Hyogo 652-8555 (JP)
(72) Inventor: YOSHIDA Shigeyoshi, Tokyo 100-8310 (JP); UMEMOTO Takahiro, Tokyo 100-8310 (JP); NADA Takashi, Tokyo 100-8310 (JP)
(74) Representative: Witte, Weller & Partner Patentanwälte mbB
(86) International application number: PCT/JP2022/031329
(87) International publication number: WO 2024/038575

(57) **Abstract**

The present disclosure includes: a coil conductor (7) which is accommodated in a slot (4) provided in a stator core (2) while leaving out an end part, and has a main insulating layer (8) on an outer periphery; a low-resistance corona shield layer (9) formed on an outer peripheral surface of the main insulating layer (8) of the coil conductor (7), and provided in contact with the stator core (2) inside the slot (4) and extending from inside to outside of the slot (4); a nonlinear resistance layer (10) provided so as to partially overlap with an outer end of the low-resistance corona shield layer (9); and a protective layer (11) provided so as to cover the low-resistance corona shield layer (9) outside the slot (4) and the nonlinear resistance layer (10). The protective layer (11) includes a nonlinear resistance material and a resin.

## Description

### TECHNICAL FIELD

The present disclosure relates to a rotating electric machine.

### BACKGROUND ART

A large rotating machine typified by a turbine electric generator needs to have high insulation performance that passes a withstand voltage test performed before shipping and does not cause insulation abnormality for an operating period of several tens of years. In particular, for a stator coil to which high voltage is applied, the structure described below is generally adopted to suppress partial discharge and insulation abnormality caused by partial discharge during a withstand voltage test and normal operation.

A stator coil has a main insulating layer formed by winding a mica tape having very excellent corona-resistant discharge characteristics around a coil conductor, impregnating the mica tape with a thermosetting resin such as an epoxy resin, and curing the same. Further, of the outermost periphery of the main insulating layer, a part accommodated in a slot of a stator core and a certain-range part outside the slot are provided with a low-resistance corona shield layer having semi-conductivity. This low-resistance corona shield layer has a function of eliminating the potential difference between the outermost layer of the stator coil and the stator core having the ground potential, and suppressing discharge inside the slot.

Meanwhile, a part of the stator coil extending out of the slot is generally referred to as a coil end. The surface potential of the coil end rises along the coil longitudinal direction from an end of the low-resistance corona shield layer having the ground potential. To relax the rising rate, i.e., an electric field along the coil surface and suppress generation of creeping discharge, a nonlinear resistance layer is provided so as to partially overlap with the end of the low-resistance corona shield layer. The nonlinear resistance layer has characteristics in which the resistivity nonlinearly decreases as the electric field value applied to a nonlinear resistance material increases. A nonlinear resistance material to be used for a large rotating machine is generally composed of silicon carbide (SiC) particles mixed with an insulating resin, and is used by a method in which the material in a tape shape in a semi-cured state is wound around the coil surface and then thermally cured, or a method in which the material in a paint-like state is applied onto the coil surface and then is dried.

In a withstand voltage test performed before product shipping of a large high-voltage rotating machine, voltage obtained by adding 1 kV to two times the rated voltage is applied to the stator coil conductor as test voltage. In this case, charge current for charging the capacitance of the main insulating layer flows inside the nonlinear resistance layer on the surface of the stator coil end, and Joule heat is generated by a resistance component of the nonlinear resistance material, thus causing local heat generation. The nonlinear resistance material is burned out upon exceeding a prescribed temperature determined by material physical properties, and an electric field relaxation function is lost, causing creeping discharge. Even if the burnout does not occur, the resistance of the nonlinear resistance material becomes higher as the temperature rises, and thus a creepage surface electric field increases, so that creeping discharge is highly likely to occur. As a method for reducing heat generation during the withstand voltage test and stabilizing the electric field relaxation function, a technique of using a plurality of nonlinear resistance materials having different resistivities is disclosed. In addition, a protective paint which is obtained by dissolving an epoxy resin in a solvent and mixing a colorant therewith is applied onto the low-resistance corona shield layer and the nonlinear resistance layer, thereby performing abnormality detection associated with a color change at the time of overheating while protecting coils from dust.

For example, Patent Document 1 discloses that an electric-field-relaxing high resistance paint having voltage nonlinear resistance characteristics is applied, as a protective layer against surface discharge, onto the outer periphery of the low-resistance corona shield layer positioned outside the slot. In addition, Patent Document 2 discloses that a buffering resistance corona shield layer is formed by using a protective paint or the like from an end of a low-resistance corona shield layer to a high-resistance corona shield layer region.

### CITATION LIST

### PATENT DOCUMENT

Patent Document 1: Japanese Laid-Open Patent Publication No. 2011-193727 (paragraphs [0048]-[0055], FIG. 8)
Patent Document 2: Japanese Laid-Open Patent Publication No. 2003-92849 (paragraphs [0011]-[0013], FIG. 1)

### SUMMARY OF THE DISCLOSURE

### PROBLEM TO BE SOLVED BY THE DISCLOSURE

However, in the conventional configuration shown in Patent Document 1 and Patent Document 2, the protective paint is not applied so as to cover the entirety of upper parts of the low-resistance corona shield layer and the nonlinear resistance layer. Thus, a problem arises in that the effect of suppressing creeping discharge might be small.

The present disclosure has been made to solve the above problem, and an object of the present disclosure is to provide a rotating electric machine having excellent insulation performance in a low-resistance corona shield layer and a nonlinear resistance layer.

### MEANS TO SOLVE THE PROBLEM

A rotating electric machine according to the present disclosure includes: a coil conductor which is accommodated in a slot provided in a core while leaving out an end part, and has an insulating layer on an outer periphery; a corona shield layer formed on an outer peripheral surface of the insulating layer of the coil conductor, and provided in contact with the core inside the slot and extending from inside to outside of the slot; a nonlinear resistance layer provided so as to partially overlap with an outer end of the corona shield layer; and a protective layer provided so as to cover the corona shield layer outside the slot and the nonlinear resistance layer. The protective layer includes a nonlinear resistance material and a resin.

### EFFECT OF THE DISCLOSURE

According to the present disclosure, progress of creeping discharge can be suppressed, and a rotating electric machine having high insulation reliability can be obtained.

### BRIEF DESCRIPTION OF THE DRAWINGS

[FIG. 1] FIG. 1 is a sectional view showing the configuration of a rotating electric machine according to embodiment 1.
[FIG. 2] FIG. 2 is a perspective view showing a major part configuration in the vicinity of a stator slot outlet in a stator of the rotating electric machine according to embodiment 1.
[FIG. 3] FIG. 3 is a sectional view showing a major part configuration at a coil end of the rotating electric machine according to embodiment 1.
[FIG. 4] FIG. 4 is a graph illustrating a mixing ratio of a nonlinear resistance material in a protective layer in the rotating electric machine according to embodiment 1.

### DESCRIPTION OF EMBODIMENTS

Hereinafter, a rotating electric machine according to the embodiment of the present disclosure will be described with reference to the drawings. In description for the embodiment, the same or corresponding parts in the drawings are denoted by the same reference characters, and the description thereof is omitted. It is noted that the present disclosure is not limited to this embodiment.

### Embodiment 1

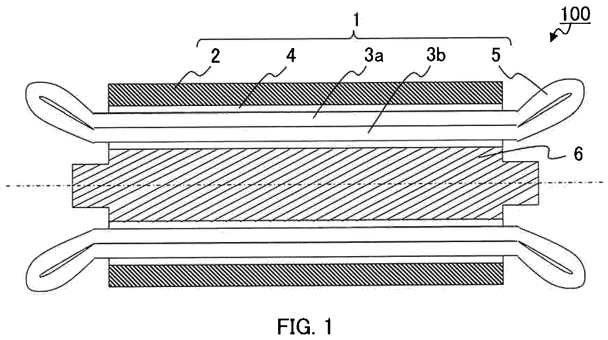

FIG. 1 is a sectional view showing the configuration of a rotating electric machine according to embodiment 1 of the present disclosure. As shown in FIG. 1, a rotating electric machine 100 is composed of a stator 1 and a rotor 6. A stator core 2 is provided with a slot 4 in which stator coils 3a and 3b are accommodated. Of the stator coils 3a and 3b partially accommodated in the slot 4, a part extending out of the slot is referred to as a coil end 5.

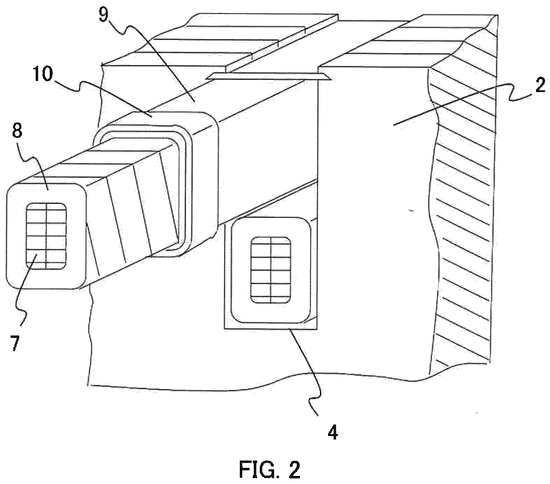

FIG. 2 is a perspective view schematically showing an insulation structure in the vicinity of a slot outlet of the stator core of the rotating electric machine according to embodiment 1 of the present disclosure. As shown in FIG. 2, the stator coils 3a, 3b are each provided with a main insulating layer 8 formed by winding a mica tape, which has excellent corona-resistant characteristics, for a predetermined number of turns around the outer periphery of a coil conductor 7 obtained by bundling a plurality of element wire conductors, then pressurizing a thermosetting resin such as an epoxy resin in vacuum and impregnating the tape therewith, and subjecting the same to a heat curing process. Further, of the outermost periphery of the main insulating layer 8, a part accommodated in the slot 4 and a certain-range part extending out of the slot 4 are provided with a low-resistance corona shield layer 9 in order to eliminate the potential difference between the outermost periphery of each stator coil 3a, 3b and the stator core 2 having the ground potential, thereby suppressing partial discharge.

The surface potential of the coil end 5 where the stator coils 3a, 3b extend out of the slot 4 starts rising along the coil longitudinal direction from an end of the low-resistance corona shield layer 9 having the ground potential, and becomes the same potential as that of the coil conductor 7. The area around the end of the low-resistance corona shield layer 9 is structurally a place where a creepage surface electric field along the coil surface tends to be high and partial discharge easily occurs. In order to relax an electric field along the coil surface and suppress generation of creeping discharge, a nonlinear resistance layer 10 is provided so as to partially overlap with the end of the low-resistance corona shield layer 9.

A functional material which is generally referred to as a nonlinear resistance material is used for the nonlinear resistance layer 10, and the material has characteristics in which the material resistivity nonlinearly decreases as the electric field value applied thereto increases. As a nonlinear resistance material to be used for a large rotating machine such as a turbine electric generator, a material obtained by dispersing, in an insulating resin, silicon carbide (SiC) particles having a particle size of about several micrometers to several tens of micrometers is used. Preparation methods for the nonlinear resistance layer 10 include a method of forming a mixture of the silicon carbide particles and the insulating resin into a tape shape in a semi-cured state, winding the tape around the coil surface, and heat-curing the same, and a method of applying, onto the coil surface, a mixture of the silicon carbide particles and the insulating resin in a state before curing, and drying the same.

In a withstand voltage test for a large rotating machine, voltage obtained by adding 1 kV to two times the rated voltage is applied to a stator coil conductor as test voltage. The rated voltage of a turbine electric generator, which depends on the electric generator capacity, is about 15 kV to 30 kV (effective value). That is, the test voltage during the withstand voltage test is 31 kV to 61 kV. If the nonlinear resistance layer 10 applied onto the coil surface is formed appropriately and functions properly, a coil creepage surface electric field is relaxed, and therefore, creeping discharge does not occur. However, in the withstand voltage test in which high voltage is applied to the coil conductor 7, there arises a problem as described below.

When the test voltage is applied, the distance of the nonlinear resistance layer 10 required for relaxing an electric field, i.e., the distance required for raising the coil surface potential along the nonlinear resistance layer 10 from the ground potential at the end of the low-resistance corona shield layer 9 to the same potential as that of the coil conductor 7, becomes extremely long. In this case, charge current for charging the capacitance of the main insulating layer 8 formed between the nonlinear resistance layer 10 and the coil conductor 7 flows inside the nonlinear resistance layer 10, thus generating Joule heat by a resistance component of the nonlinear resistance layer 10. The nonlinear resistance material is burned out upon exceeding a prescribed temperature determined by material physical properties, and the electric field relaxation function is lost, causing creeping discharge on the coil surface. Even if the burnout does not occur, nonlinear resistance characteristics, i.e., characteristics in which the resistivity decreases as an electric field increases, are reduced as the material temperature rises, thus substantially causing a higher resistance. Consequently, a creepage surface electric field increases, so that creeping discharge on the coil surface is highly likely to occur.

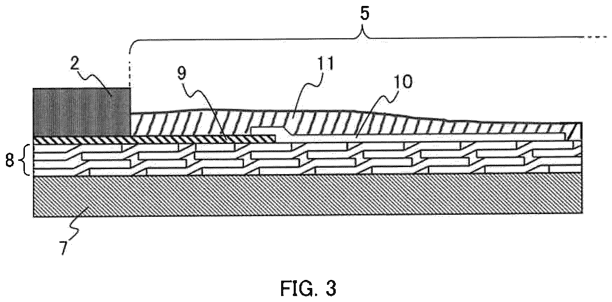

FIG. 3 is a sectional view showing a major part configuration at the coil end of the rotating electric machine according to embodiment 1 of the present disclosure. As shown in FIG. 3, in the coil end 5 of the rotating electric machine 100, the protective layer 11 is provided so as to cover the upper parts of the low-resistance corona shield layer 9 and the nonlinear resistance layer 10. The protective layer 11 is formed by applying a protective paint obtained by dissolving a resin such as an epoxy resin in a solvent and dispersing therein a colorant and a nonlinear resistance material. As the nonlinear resistance material, silicon carbide particles having a particle size of about several micrometers to several tens of micrometers are used.

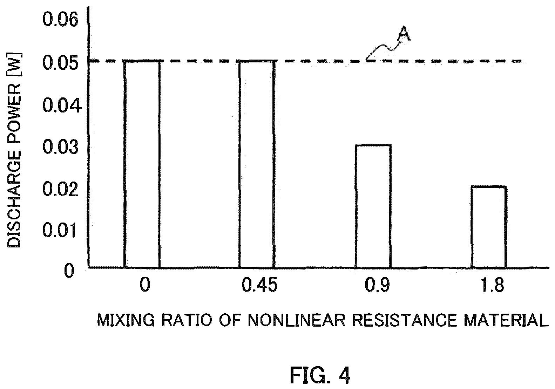

Regarding the mixing ratio of the nonlinear resistance material to the insulating resin, it is preferable to disperse the silicon carbide particles in the insulating resin at a ratio between the silicon carbide particles and the epoxy resin of 0.9 to 1.8:1.0. FIG. 4 is a graph illustrating the mixing ratio of the nonlinear resistance material in the protective layer in the rotating electric machine according to embodiment 1 of the present disclosure.

As shown in FIG. 4, when the mixing ratio of the nonlinear resistance material is below the ratio 0.9:1.0, the discharge power becomes 0.05 W (threshold A) or more, and discharge occurs. Since the paint for forming the protective layer 11 is mixed with a colorant, the color of the colorant changes at the time of overheating, whereby abnormality detection can be performed, but when the mixing ratio of the nonlinear resistance material exceeds the ratio 1.8:1.0, it is difficult to discern the color change at the time of overheating.

In this configuration, since the protective paint mixed with the nonlinear resistance material covers the coils, even if the resistances of the resistance layer corona shield layer 9 and the nonlinear resistance layer 10 are reduced due to Joule heat generation, the protective layer 11 mixed with the nonlinear resistance material has the electric field relaxation effect and thus can reduce a creepage surface electric field, whereby the effect of suppressing progress of creeping discharge between the coils is provided. In addition, the effects of protecting the coils from humidity and dust at the time of production of the rotating electric machine 100 and suppressing discharge between the coils are provided. Furthermore, the color change of the colorant at the time of overheating enables abnormality detection.

It is noted that in the present embodiment 1, silicon carbide is used as the nonlinear resistance material, but the material is not limited thereto. For example, the use of alumina (Al₂O₃) or zinc oxide (ZnO) can provide a similar effect.

As described above, a rotating electric machine 100 according to the present embodiment 1 includes: a coil conductor 7 which is accommodated in a slot 4 provided in a stator core 2 while leaving out an end part, and has a main insulating layer 8 on an outer periphery; a low-resistance corona shield layer 9 formed on an outer peripheral surface of the main insulating layer 8 of the coil conductor 7, and provided in contact with the stator core 2 inside the slot 4 and extending from inside to outside of the slot 4; a nonlinear resistance layer 10 provided so as to partially overlap with an outer end of the low-resistance corona shield layer 9; and a protective layer 11 provided so as to cover the low-resistance corona shield layer 9 outside the slot 4 and the nonlinear resistance layer 10. The protective layer 11 includes a nonlinear resistance material and a resin. Thus, even if the resistances of the resistance layer corona shield layer and the nonlinear resistance layer are reduced due to Joule heat generation, the protective layer including the nonlinear resistance material has the electric field relaxation effect and thus can reduce a creepage surface electric field, thereby suppressing discharge power between the coils while suppressing progress of creeping discharge.

Although the disclosure is described above in terms of various exemplary embodiments, it should be understood that the various features, aspects, and functionality described in the individual embodiments are not limited in their applicability to the particular embodiment with which they are described, but instead can be applied, alone or in various combinations to the embodiments of the disclosure. It is therefore understood that numerous modifications which have not been exemplified can be devised without departing from the scope of the present disclosure. For example, at least one of the constituent components may be modified, added, or eliminated. At least one of the constituent components may be selected and combined with other constituent components.

### DESCRIPTION OF THE REFERENCE CHARACTERS

- 1: stator
- 2: stator core
- 3a, 3b: stator coil
- 4: slot
- 5: coil end
- 6: rotor
- 7: coil conductor
- 8: main insulating layer
- 9: low-resistance corona shield layer
- 10: nonlinear resistance layer
- 11: protective layer
- 100: rotating electric machine

## Claims

1. A rotating electric machine comprising:
a coil conductor which is accommodated in a slot provided in a core while leaving out an end part, and has an insulating layer on an outer periphery;
a corona shield layer formed on an outer peripheral surface of the insulating layer of the coil conductor, and provided in contact with the core inside the slot and extending from inside to outside of the slot;
a nonlinear resistance layer provided so as to partially overlap with an outer end of the corona shield layer; and
a protective layer provided so as to cover the corona shield layer outside the slot and the nonlinear resistance layer, wherein
the protective layer includes a nonlinear resistance material and a resin.

2. The rotating electric machine according to claim 1, wherein the protective layer includes a colorant.

3. The rotating electric machine according to claim 2, wherein the protective layer has a mixing ratio between the nonlinear resistance material and the resin in a range of 0.9 to 1.8:1.0.
